# EUROPEAN PATENT SPECIFICATION

(11) **EP 1 365 192 B1**
(45) Date of publication and mention of the grant of the patent: **10.04.2013**
(21) Application number: 03396047.7
(22) Date of filing: 23.05.2003
(51) Int. Cl.: F22B 31/04

(54) **A power boiler and a method for burning fuel in a boiler**
Dampferzeuger und Verfahren zum Verbrennen eines Brennstoffes in einem Dampferzeuger
Chaudière et procédé pour brûler du carburant dans une chaudière

(30) Priority: 24.05.2002 FI 20020974
(43) Date of publication of application: 26.11.2003
(73) Proprietor: Metso Power Oy, 33101 Tampere (FI)
(72) Inventor: Petänen, Pertti, 33720 Tampere (FI); Eteläaho,Risto, 33500 Tampere (FI)
(74) Representative: Hakola, Unto Tapani

(56) References cited:
- FR-A- 1 217 518
- US-A- 2 285 442
- US-A- 2 673 553
- US-A- 3 017 870
- PATENT ABSTRACTS OF JAPAN vol. 1998, no. 05, 30 April 1998 (1998-04-30) & JP 10 009545 A (BABCOCK HITACHI KK), 16 January 1998 (1998-01-16)

## Description

The invention relates to a power boiler according to the preamble of the appended claim 1. The invention also relates to a method for burning fuel in a boiler.

Such a boiler and method is disclosed in FR1217518A.

The variety of fuels to be burnt in a power boiler is often wide. It is possible to burn better and poorer fuels in the same boiler. In particular, the burning of various types of refuse sets demands on, for example, the burning temperature, the retention time, *etc.* Corrosion is a major problem, which is to be controlled by the choice of materials and, in fluidized bed boilers, for example, by means of a heat exchanger in the fluidized bed. In practice, the maximum temperature of steam is normally lower in a boiler for refuse incineration than in other power boilers.

A multi-fuel boiler must be designed as a boiler for refuse, if refuse belongs to the variety of fuels. An expensive auxiliary fuel, for example oil, must be burnt in partial loads to maintain the required minimum temperature. Special materials for superheaters are expensive, and the power-to-heat ratio of the boiler remains low, due to the low superheating temperature. Fluidized bed heat exchangers are complex and expensive.

Finnish patent 102395 and corresponding European patent 614500 present a method for energy recovery from spent liquors of pulp processes. The method relates to that step in the pulp production process in which energy is recovered from the organic part of spent liquor of the process in a boiler, a so-called soda recovery boiler. The method utilizes the gasification of the spent liquor, wherein the produced gases can be burnt in a separate boiler, a so-called superheating boiler. The starting point for the method is the same fuel which is processed to produce a fraction which can be used separately for the final superheating of the steam to a high temperature.

A small-scale heating boiler for the simultaneous burning of oil and solid refuse is disclosed in German patent 1166964. The heat produced by an oil burner can be utilized for the burning of refuse placed in a separate chamber, which for their part produce heat into water from which the heat is transferred to an actual circulating heat transfer medium in a heat exchanger. This is not a boiler of industrial scale for producing superheated steam.

Boilers having two furnaces which are dimensioned to burn similar fuel are disclosed by documents US-A-3017870 and JP-A-10009545, showing also the final superheater in one of the furnace.

The purpose of the invention is to eliminate the above-mentioned drawbacks and to provide a power boiler of industrial scale for producing superheated steam to avoid said disadvantages. This is a boiler intended primarily for power production and for the combustion of a primary fuel with a good thermal value and a uniform quality (for example, a biofuel, such as peat), which boiler can also be used for refuse incineration. To attain this purpose, the power boiler according to the invention is primarily characterized in what will be presented in the characterizing part of the appended claim 1.

The structure of the boiler makes it possible to burn a fuel with a higher thermal value and a fuel with a lower thermal value, such as a fuel subject to the waste directive, separately in different furnaces. The better fuel can be used to superheat the developed steam to a final temperature. Each furnace is provided with heat transfer surfaces, through which the heat produced during the burning of the fuel is transferred to water, from which steam is developed. The first furnace is dimensioned as a boiler that burns a fuel of a good quality. The refuse incineration part of the boiler is dimensioned as a refuse boiler, meeting the demands for the combustion temperature and the retention time. Naturally, it is also possible to burn less demanding fuels in the refuse incineration part. In principle, it is also possible to burn exactly the same primary fuel intended for energy production in both of the furnaces.

The differentiated furnaces of the boiler can be placed in the same framework. Both of the furnaces can be placed within the same outer walls, and they are separated from each other by a partition wall therein. Both furnaces can also share a common grate, on whose level the combustion processes are differentiated by pipe-specific control means of the pipe grate which can be used to divide the grate into two parts to be controlled independently of each other.

Both furnaces of the boiler are provided with heat transfer surfaces, known as such, for transferring heat produced during the combustion to water, from which steam is produced by the heat of the combustion process of the boiler. A flue gas channel placed after the furnaces may be provided with residual-heat transfer surfaces, known as such, for the recovery of heat from flue gases. In principle, the boiler can be a power boiler for burning any fuel and producing superheated steam for industry (including power industry), including boilers for electrical power stations and for industrial power plants and district heating plants, and it can operate, for example, by the principle of a fluidized bed.

In the following, the invention will be described in more detail with reference to the appended drawings, in which
- Fig. 1: shows one embodiment of the power boiler,
- Fig. 2: shows a second embodiment of the power boiler, and
- Figs. 3 to 6: show, in top views, some advantageous embodiments relating primarily to the pipes in the grate and the supply of the fuel.

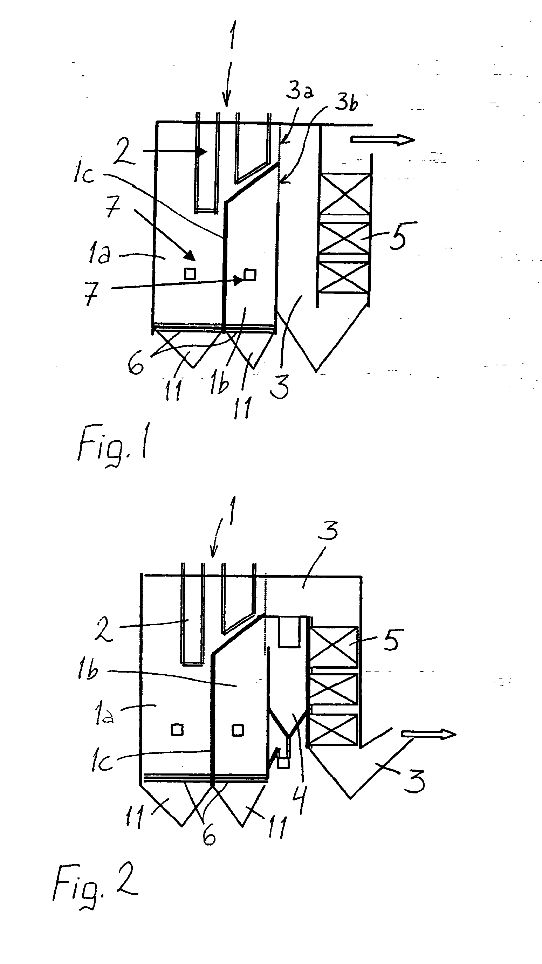

Figure 1 shows a power boiler comprising a furnace 1 for burning a fuel, a final superheater 2 for producing superheated steam at the upper part of the furnace, and a flue gas channel 3, through which the flue gases produced during the combustion in the furnace are exhausted. The fuel boiler is provided with so-called heat transfer surfaces for producing steam from water. The energy of the produced steam can be utilized.

In the power boiler shown in Fig. 1, the furnace 1 is divided into two parts, a first furnace 1a and a second furnace 1b. The combustion processes of the furnaces 1a and 1b are differentiated from each other. Each furnace 1a,1b is provided with a fuel supply of its own, through which fuel can be supplied independently of the fuel supply of the adjacent furnace. In the first furnace, a better fuel is burnt to achieve a sufficiently high temperature for the superheating of steam. Because of this, the final superheater 2 of the steam production process for bringing the superheated steam to the final temperature is placed in the upper part of the first furnace 1a, through which the gases produced during the combustion are led into the flue gas channel 3. At the same time, problems of corrosion can be avoided in the superheater, if the fuel to be burnt in the furnace 1a is selected with this in mind. The second furnace 1b is used for burning a fuel with poorer combustion properties, such as refuse. In this part, it is possible to focus on achieving the retention time and temperature required in the waste directive or in other regulations, when refuse is incinerated therein. Similarly, the detrimental components of the flue gases produced by the refuse are no longer a problem in hot superheaters. The flue gases flow from this second furnace 1b to the channel 3 in which they mix into the flue gases issuing from the first furnace 1 a.

The flue gases of the second furnace 1b join the flue gases flowing in the flue gas channel 3 and originating in the first furnace 1a, after the final superheater 2 in the flow direction of the flue gases.

Now, the boiler can be designed for a high steam temperature, because, for example, flue gases having a high chlorine content (and originating in the combustion process of the second furnace 1b) do not meet the final superheater 2 of the high temperature. Only the flue gases of the first furnace 1 a pass through the final superheater 2. Structurally, the furnaces 1 a, 1 b are placed next to each other in such a way that they are separated by a vertical partition wall 1c. The furnaces can thus be formed within common outer walls. These outer walls are provided with heat transfer surfaces, known as such, for transferring heat into water, to produce steam. The heat transfer surfaces can be tubular walls with a known structure, the water and the formed steam flowing in the tubes of the walls. Figure 1 also shows that the partition wall 1c has an inclined upper part in such a way that the second furnace 1 b is located at least partly, in the figure completely underneath the partition wall, and partly also underneath the final superheater 2 of the first furnace 1 a. Adjacent to the outer walls shared by the furnaces 1 a and 1 b, that is, next to the outer wall of the second furnace 1b in the case shown in Fig. 1, there is the downwards directed part of the flue gas channel 3. The second furnace 1b goes out in the flue gas channel after the first furnace 1a, and the corresponding inlets 3a, 3b to the downwards directed first part of the flue gas channel 3 are thus located one below the other. In the lowest part of the flue gas channel, there is a pocket or the like for collecting material separated from the flue gases. Next, the channel 3 is directed upwards, and it is provided with residual-heat transfer surfaces 5 acting as heat exchangers. When the flue gases from both of the furnaces 1 a, 1 b, *i.e.* the gases from the first furnace 1a which have cooled in the superheater 2 and the gases from the second furnace 1b which have not cooled in the superheater and have a higher temperature, are mixed in the flue gas channel 3, the critical temperature is achieved relatively easily before the residual-heat transfer surfaces 5. The gases coming from the first furnace 1a and having passed through the superheater thus reduce the temperature of the flue gases from the combustion process of the second furnace 1b before the flue gases come into contact with the residual-heat transfer surfaces 5. As a result, the heat corrosion and the risk of soiling are reduced on these surfaces.

The fuel boilers of Figs. 1 and 2 are so-called fluidized bed boilers. In Fig. 1, the first furnace 1a is a furnace operating on the principle of bubbling fluidized bed (BFB), and the second furnace 1b also operates on the principle of bubbling fluidized bed (BFB).

In Fig. 2, the first furnace 1a is similar to that of Fig. 1, but the second furnace 1 b for burning a fuel with a lower thermal value operates on the principle of circulating fluidized bed (CFB). The position of the furnaces 1a,1b in relation to each other is the same as in Fig. 1, but a separator device 4, such as a cyclone, is provided between the downwards directed part of the flue gas channel 3 and the second furnace 1b, to return the fluidized bed material to the furnace 1b. From the upper part of the separator device 4, the flue gases from the second furnace 1b are led into the flue gas channel, whose initial part extends approximately horizontally above the separator device 4. Also in this case, the flue gases from the second furnace 1 b mix into the flue gases from the first furnace 1a, flowing in the channel 3.

In the second furnace 1b, the ratio of the heat transfer surface to the volume is lower than in the first furnace. This can be implemented by making a large part of the walls limiting the furnace of a refractory material of poor thermal conductivity (refractory lining), such as a protecting brickwork or the like. Thanks to the small heat transfer surface, it is possible in the second furnace 1b to maintain the temperature (higher than 850°C) required by the waste directive, in spite of the long retention times required by the waste directive, and also with partial loads. The flue gases from the furnace 1b can be cooled by the flue gases from the first furnace 1a in the common flue gas channel 3, as described above.

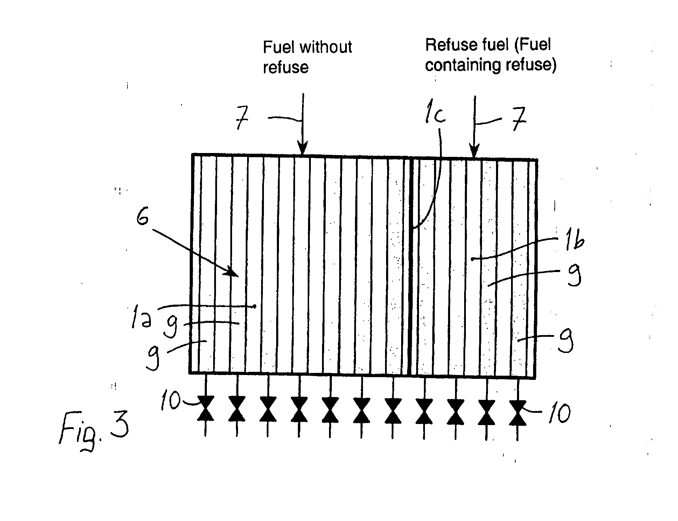

The following is a more detailed description of the grate in the lower part of the furnaces 1a,1b, and the fluidized bed process. The structure of the grate is shown in Figs. 3 to 6.

The furnaces are limited, from below, by the grate 6 used as a structure for distribution of fluidizing air and combustion air, and having parallel hollow pipes 9 provided with nozzles, from which an air flow is directed upwards. Thanks to this air flow, in each furnace the bed material consisting of inert solid material particles is fluidized to form a fluidized bed, in which combustion takes place. The fuel is supplied to the fluidized beds from feed inlets 7. Combustion air can be introduced into the furnace from one or more levels. The pipes 9 are cooled by a heat transfer medium flowing in longitudinal channels therein. The channels may be arranged in the walls limiting the inner part of the pipe (the air channel).

Each furnace 1 a, 1 b is provided with a unit 11 for collecting material from the fluidized bed, arranged underneath the grate 6 (shown in Figs. 1 and 2).

The walls of the furnaces 1a,1b are equipped with heat transfer tubes for transferring combustion heat into the water and steam flowing in the tubes.

Figure 3 shows the fluidized bed boiler in a horizontal cross-section of the furnaces 1a,1b; *i.e.,* it shows the grate 6 from above. In Fig. 3b, the direction of fuel supply and simultaneously the location of the feed inlets are indicated with arrows. The grate 6 comprises, on the same level, parallel pipes 9 placed next to each other, along which combustion air is introduced into the grate, the air flowing from the pipes via fluidizing nozzles upwards into the furnace above the grate structure. The combustion air acts simultaneously as the fluidizing air. The air is supplied to the pipes 9 from a common inlet channel (not shown). In Fig. 3, each pipe 9 in each furnace is equipped with a control means 10 for closing and opening a connection between the inlet channel and the respective pipe 9 and for adjusting the air flow rate as well.

Figure 3 also shows how the fuel is supplied in the running direction of the pipes 9. Furthermore, the pipes 9 are in parallel with the partition wall 1c that separates the furnaces 1a,1b. The pipes are thus divided in the grate in such a way that a given number of pipes is placed completely in the first furnace 1a and the rest are placed completely in the second furnace 1b.

By means of the control means 10, the supply of fluidizing air can be differentiated in each furnace 1a,1b. Because all the pipes are equipped with the control means 10, fluidizing air can also be adjusted within each furnace 1a,1b. By closing the connection to one or more pipes, the effective surface area of the grate of the furnace 1 a or 1 b can also be adjusted within the furnace. However, the grate 6 is common to both of the furnaces in the sense that the same grate structure consisting of parallel pipes 9 forms the bottom for both furnaces 1a,1b.

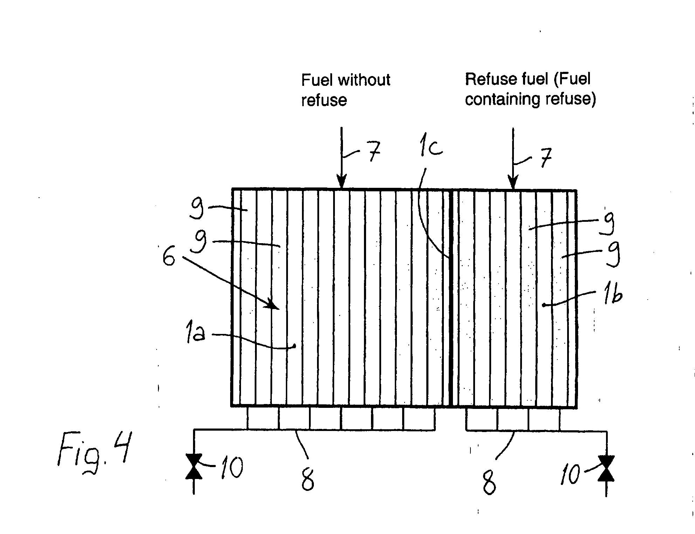

Figure 4 shows a second alternative, according to which the control of the fluidizing air can be implemented separately for each furnace. Each furnace has a separate fluidizing air inlet channel 8 common to the pipes, from which channel the air is distributed into the pipes 9 of the respective furnace. Both of the common inlet channels 8 are provided with respective control means 10. In other respects, the placement of the pipes 9 in the furnaces and the fuel supply are similar to those of Fig. 3.

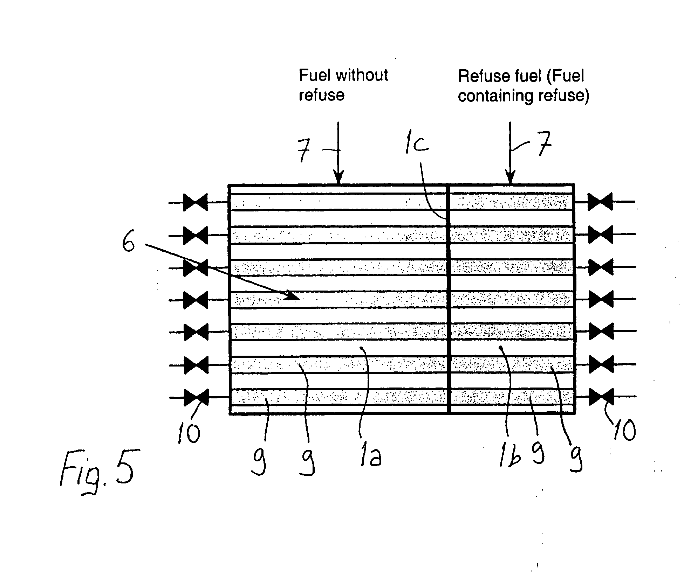

In Fig. 5, in turn, each pipe 9 is equipped with a control means 10 for closing and opening the connection between the air channel and the respective pipe 9. The pipes 9 extend from one side of the partition wall 1c separating the furnaces 1a, 1b to the other side; that is, the pipes are common to both of the furnaces 1 a, 1 b. The pipes are therefore equipped at each end with control means 10 for implementing the control of the fluidizing air in each furnace. Furthermore, the pipes are closed at the partition wall 1c in such a way that with respect to the air flow, the same pipe 9 is provided with sections separated from each other: the first section under the first furnace 1 a and the second section under the second furnace 1b. Because of the placement of the pipes, the fuel (inlets 7) is now supplied in a direction perpendicular to the direction of the pipes.

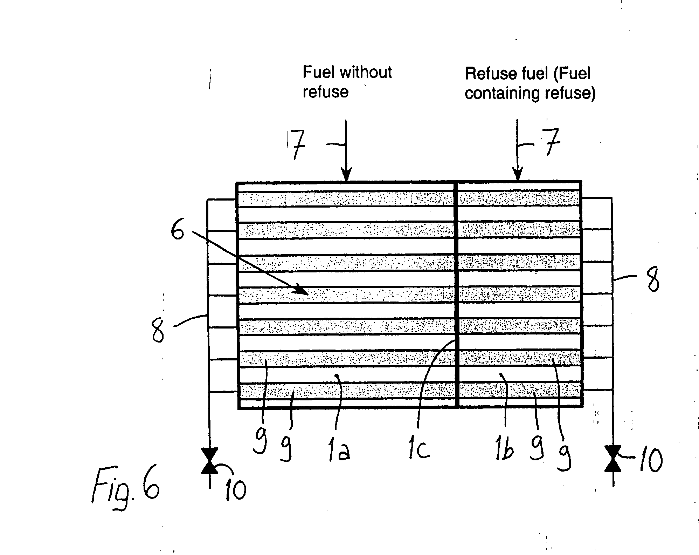

Figure 6 shows, with respect to the placement and closing of the pipes, the same embodiment as Fig. 5, but each furnace 1a,1b is provided with an inlet channel 8 of its own which is branched off to different pipes 9 after the control means 10; that is, the idea is the same as in Fig. 4.

The invention is not restricted to the above embodiments, but it can be modified within the scope of the inventive idea presented in the claims. In the second furnace 1b, it is also possible to burn another fuel mixed with refuse. Furthermore, in the different furnaces 1 a, 1b, it is possible to burn a fuel with the same thermal value but which may be different substances. It is also possible that exactly the same fuel is burnt simultaneously in the different furnaces. The advantage of the invention is thus the variability of the process, if certain fuels are not always available. However, the boiler is particularly suitable for a process for the simultaneous combustion of a primary fuel in the first furnace, the fuel being intended for energy production and having a good thermal value and good combustion properties, its flue gases containing little or no substances detrimental at a high temperature on the surfaces of the superheater and refuse in the second furnace for the purposes of refuse disposal but simultaneously also producing a part of the total energy produced by the combustion process of the boiler.

## Claims

1. A power boiler comprising a furnace for the combustion of a fuel, a superheater at the upper part of the furnace for producing superheated steam, and a flue gas channel (3) for discharging flue gases from the furnace, said power boiler comprisesing two parallel first and second furnaces (1a, 1b), each provided with heat transfer surfaces arranged to produce steam, and only one first furnace (1a) comprising, in addition to the heat transfer surfaces, a final superheater (2) arranged to superheat the steam to a final temperature the joining point of the flue gases of said furnaces (1a, 1b) in the flue gas channel (3) being **in** the flow direction of the flue gases after the final superheater (2), **characterized in that** in the second furnace (1b) with no final superheater the ratio of the heat transfer surface to the volume is lower than in the first furnace.

2. The power boiler according to claim 1, **characterized in that** it is a fluidized bed boiler.

3. The power boiler according to claim 2, **characterized in that** both of the furnaces (1a, 1b) are arranged to operate on the principle of a bubbling fluidized bed.

4. The power boiler according to claim 2, **characterized in that** one of the furnaces is arranged to operate on the principle of a bubbling fluidized bed and the other one on the principle of a circulating fluidized bed.

5. The power boiler according to any of the preceding claims, **characterized in that** the furnaces (1a, 1 b) are separated from each other with a common partition wall (1c).

6. The power boiler according to any of the preceding claims, **characterized in that** both of the furnaces are provided with a common grate (6).

7. A method for the combustion of fuel in a boiler for producing steam, **characterized in** wherein wherein the fuel is burnt simultaneously in two parallel furnaces, in combustion processes differentiated from each other, in a first furnace (1a) and a second furnace (1b) which are both used to produce steam, and the steam is superheated to a final temperature in the first furnace (1a) only and the the gases from the first furnace (1a) which have cooled in the superheater (2) and the gases from the second furnace (1b) are mixed in the flue gas channel 3, **characterized in that** the second furnace (1b) is used for the combustion of a fuel with poorer combustion properties and/or with a lower thermal value and/or producing more corrosive flue gases, than the fuel in the first furnace (1a).

8. The method according to claim 7, **characterized in that** the second furnace (1b) is used for the combustion of refuse.

9. The method according to claim 7 or 8, **characterized in that** the combustion takes place in a fluidized bed.

## Patentansprüche

1. Dampferzeuger mit einer Feuerung für die Verbrennung eines Brennstoffes, einem Überhitzer am oberen Teil der Feuerung zur Erzeugung von Heißdampf, und einem Rauchgaskanal (3) zum Ablassen von Rauchgasen aus der Feuerung, wobei der Dampferzeuger zwei parallele Feuerungen, erste und zweite Feuerungen (1 a, 1b) aufweist, wobei jede mit Wärmeübertragungsflächen versehen ist, die angeordnet sind, um Dampf zu erzeugen, und wobei nur eine erste Feuerung (1 a) zusätzlich zu den Wärmeübertragungsflächen einen Endüberhitzer (2) aufweist, der angeordnet ist, um den Dampf auf eine Endtemperatur zu überhitzen, wobei sich der Vereinigungspunkt der Rauchgase der Feuerungen (1 a, 1b) in dem Rauchgaskanal (3) in der Fließrichtung der Rauchgase nach dem Endüberhitzer (2) befindet, **dadurch gekennzeichnet, dass** in der zweiten Feuerung (1 b) ohne Endüberhitzer das Verhältnis der Wärmeübertragungsfläche zum Volumen niedriger als in der ersten Feuerung ist.

2. Dampferzeuger gemäß Anspruch 1, **dadurch gekennzeichnet, dass** es sich um einen Wirbelschicht-Dampferzeuger handelt.

3. Dampferzeuger gemäß Anspruch 2, **dadurch gekennzeichnet, dass** beide Feuerungen (1 a, 1b) angeordnet sind, um gemäß dem Prinzip einer blasenbildenden Wirbelschicht zu arbeiten.

4. Dampferzeuger gemäß Anspruch 2, **dadurch gekennzeichnet, dass** eine der Feuerungen (1 a, 1b) angeordnet ist, um gemäß dem Prinzip einer blasenbildenden Wirbelschicht zu arbeiten und die andere gemäß dem Prinzip einer zirkulierenden Wirbelschicht.

5. Dampferzeuger gemäß einem der vorhergehenden Ansprüche, **dadurch gekennzeichnet, dass** die Feuerungen (1 a, 1b) durch eine gemeinsame Trennwand (1 c) voneinander getrennt sind.

6. Dampferzeuger gemäß einem der vorhergehenden Ansprüche, **dadurch gekennzeichnet, dass** die beiden Feuerungen mit einem gemeinsamen Feuerrost (6) versehen sind.

7. Verfahren zum Verbrennen eines Brennstoffes in einem Dampferzeuger zur Erzeugung von Dampf, wobei der Brennstoff gleichzeitig in zwei parallelen Feuerungen verbrannt wird, in voneinander unterschiedenen Verbrennungsprozessen, in einer ersten Feuerung (1 a) und einer zweiten Feuerung (1 b), die beide verwendet werden, um Dampf zu erzeugen, und der Dampf auf eine Endtemperatur nur in der ersten Feuerung (1 a) überhitzt wird, und die Gase aus der ersten Feuerung (1 a), die in dem Übererhitzer (2) abgekühlt sind, und die Gase aus der zweiten Feuerung (1 b) in dem Rauchgaskanal (3) gemischt werden, **dadurch gekennzeichnet, dass** die zweite Feuerung (1 b) für die Verbrennung eines Brennstoffes mit schlechteren Verbrennungseigenschaften und/oder mit einem niedrigeren Wärmewert und/oder mit stärkerer Erzeugung von korrosiven Rauchgasen als der Brennstoff in der ersten Feuerung (1 a) verwendet wird.

8. Verfahren gemäß Anspruch 7, **dadurch gekennzeichnet, dass** die zweite Feuerung (1 b) für die Abfallverbrennung verwendet wird.

9. Verfahren gemäß Anspruch 7 oder 8, **dadurch gekennzeichnet, dass** die Verbrennung in einer Wirbelschicht stattfindet.

## Revendications

1. Chaudière comprenant un four pour la combustion d'un combustible, un surchauffeur au niveau de la partie supérieure du four pour produire de la vapeur surchauffée et un canal de gaz de combustion (3) pour l'évacuation des gaz de combustion du four, ladite chaudière comprenant deux premier et second fours parallèles (1a, 1b), pourvus chacun de surfaces de transfert de chaleur adaptées pour produire de la vapeur, et seul un four, le premier (1a), comprenant, en plus des surfaces de transfert de chaleur, un surchauffeur final (2) adapté pour surchauffer la vapeur à une température finale, le point de jonction des gaz de combustion desdits fours (1a, 1 b) dans le canal de gaz de combustion (3) se situant dans la direction d'écoulement des gaz de combustion après le surchauffeur final (2), **caractérisée en ce que**, dans le second four (1 b), dépourvu de surchauffeur final, le rapport de la surface de transfert de chaleur au volume est inférieur à ce qu'il est dans le premier four.

2. Chaudière selon la revendication 1, **caractérisée en ce qu'**il s'agit d'une chaudière à lit fluidisé.

3. Chaudière selon la revendication 2, **caractérisée en ce que** les deux fours (1a, 1b) sont adaptés pour fonctionner sur le principe d'un lit fluidisé bouillonnant.

4. Chaudière selon la revendication 2, **caractérisée en ce qu'**un des fours est adapté pour fonctionner sur le principe d'un lit fluidisé bouillonnant et l'autre four sur le principe d'un lit fluidisé circulant.

5. Chaudière selon l'une quelconque des revendications précédentes, **caractérisée en ce que** les fours (1a, 1b) sont séparés l'un de l'autre par une cloison commune (1 c).

6. Chaudière selon l'une quelconque des revendications précédentes, **caractérisée en ce que** les deux fours sont pourvus d'une grille commune (6).

7. Procédé pour la combustion d'un combustible dans une chaudière pour produire de la vapeur, dans lequel le combustible est brûlé simultanément dans deux fours parallèles dans des processus de combustion différenciés l'un de l'autre dans un premier four (1a) et un second four (1 b) qui sont utilisés tous les deux pour produire de la vapeur, et la vapeur est surchauffée à une température finale dans le premier four (1 a) seulement et les gaz du premier four (1a) qui se sont refroidis dans le surchauffeur (2) et les gaz du second four (1 b) sont mélangés dans le canal de gaz de combustion (3), **caractérisé en ce que** le second four (1 b) est utilisé pour la combustion d'un combustible ayant de moins bonnes propriétés de combustion et/ou ayant une valeur thermique moindre et/ou produisant plus de gaz de combustion corrosifs que le combustible dans le premier four (1 a).

8. Procédé selon la revendication 7, **caractérisé en ce que** le second four (1 b) est utilisé pour la combustion de déchets.

9. Procédé selon la revendication 7 ou 8, **caractérisé en ce que** la combustion se déroule dans un lit fluidisé.
